# EUROPEAN PATENT APPLICATION

(11) **EP 2 645 347 A1**
(43) Date of publication of application: **02.10.2013**
(21) Application number: 12002335.3
(22) Date of filing: 30.03.2012
(51) Int. Cl.: G08B 21/02, G08B 13/14, G08B 29/08

(54) **Apparatus and method for supporting theft protection**

(71) Applicant: Telefonaktiebolaget LM Ericsson (publ), 164 83 Stockholm (SE)
(72) Inventor: Öhman, Peter, Mr., 182 45 Enebyberg (SE)
(74) Representative: Strandin, Heléne

(57) **Abstract**

An apparatus and a method for protecting an electronic equipment (100) from being stolen when using a protection unit (102) adapted to communicate with a surveillance centre (104) when it is detected that the electronic equipment has been stolen. A communication unit (108) at the electronic equipment transmits control signals indicating whether the protection unit is working alright. A fault detector (110) receives the control signals and indicates a fault when detecting that the protection unit is not working depending on the control signals. In that case, an operation control unit (112) disables the electronic equipment in response to the indicated fault. Thereby, it is not attractive to steal the electronic equipment since it will be made more or less useless once it is detected that it has been stolen.

## Description

### Technical field

The present disclosure relates generally to an apparatus and a method for supporting theft protection of an equipment with some electronic feature or function.

### Background

It has been a long term problem to prevent stealing of various equipment, devices and products having some electronic feature or function, and there are numerous examples of such equipment that is attractive and common to steal, such as domestic appliances including TV and Hi-Fi equipment, computers, cameras, vehicles including cars and motorcycles, outboard marine engines for boats, just to mention a few examples of equipment commonly being subject to theft. In this description, the term "electronic equipment" will be used to represent any devices and products with functionality and/or operational features that can be controlled electronically.

Recently, a solution has been developed which involves a protection unit capable of detecting and reporting position, typically using the well-known Global Positioning System, GPS, which unit can be mounted on or inside the electronic equipment. This type of protection unit is typically configured to send an alarm to a surveillance centre or the like when an abnormal position is detected by the unit. The "abnormal" position in this context may be a position outside a predefined allowed area or spot where the equipment should be situated at normal conditions. Otherwise, it can be assumed that the equipment has been stolen and taken somewhere else, i.e. to an abnormal position.

For example, when such a protection unit is installed within an outboard marine engine being stored in one place during winter, the protection unit may issue an alarm once it detects that the engine is moved from that place when being stolen. In this way, the protection unit can thus notify the surveillance centre as soon as the equipment is moved and also provide its current whereabouts in the form of GPS coordinates to enable tracking of the stolen equipment.

However, it is a problem that thieves are often able to find and identify the installed protection unit and they can then easily remove the protection unit from the stolen equipment and leave it at the location of theft. In that case, the protection unit will never detect any abnormal position since it has not been moved to another place. Even if the protection unit would be configured to issue an alarm when it is separated from the protected equipment, or when it is somehow "stirred" or shaken, the equipment has been taken to an unknown location anyway and can be very difficult if not impossible to locate and recover.

Another option for the thieves to stay away from discovery is of course to demolish the protection unit once identified and it will naturally not be able to issue any alarm or notification whatsoever. This can be avoided by integrating the protection unit closely with some functional part of the equipment, as proposed in US 2008/0268866 A1 describing that GPS based theft protection is fully integrated and embedded in a mobile phone, making separation or demolition of the protection unit virtually impossible without also damaging the equipment. Still, the thieves can circumvent this solution as well by taking the equipment to a place such as an isolated underground room or similar with no radio contact where the protection unit cannot communicate and issue any alarm.

### Summary

It is an object of the invention to address at least some of the problems and issues outlined above, e.g. by making it less attractive or even pointless to steal an electronic equipment altogether. It is possible to achieve these objects and others by using an apparatus and a method as defined in the attached independent claims.

According to one aspect, an apparatus is provided for supporting theft protection of an electronic equipment when using a protection unit adapted to communicate with a surveillance centre when it is detected that the electronic equipment has been stolen. The apparatus comprises a communication unit adapted to transmit control signals indicating whether the protection unit is working in a predefined manner, basically meaning that the electronic equipment can be assumed not to have been stolen. The apparatus also comprises a fault detector adapted to receive the control signals and to indicate a fault when detecting that the protection unit is not working in the predefined manner depending on the control signals, and an operation control unit adapted to disable the electronic equipment in response to the indicated fault.

According to another aspect, a method is provided for supporting theft protection of an electronic equipment when using a protection unit adapted to communicate with a surveillance centre when it is detected that the electronic equipment has been stolen. In this method, control signals are transmitted from a communication unit at the protection unit indicating whether the protection unit is working in a predefined manner. Further, a fault is indicated when detecting that the protection unit is not working in the predefined manner depending on the control signals, and the electronic equipment is disabled in response to the indicated fault.

The above apparatus and method can be used to achieve that the electronic equipment is made more or less useless once it is detected that it has been stolen. Assuming that any potential thieves are aware of this, e.g. by putting an informative tag, label, sticker or the like on the equipment, they will not be motivated to steal the equipment in the first place.

The above apparatus and method may be configured and implemented according to different optional embodiments. In one possible embodiment, the communication unit may be further adapted to transmit control signals indicating that the protection unit or the surveillance centre has detected theft of the electronic equipment. The fault detector may then be further adapted to indicate said theft, and in that case, the operation control unit is further adapted to disable the electronic equipment in response to the indicated theft.

In further possible embodiments, the fault detector may be further adapted to detect that the protection unit is not working in the predefined manner when no control signals can be received from the communication unit, or when the communication unit transmits a fault notification indicating any of: the protection unit is not able to determine a position, the protection unit is not able to issue any alarm or respond to polling, and the protection unit is not able to connect to a communication network. The fault detector may indicate any detected fault or theft by emitting a signal or pulse that triggers the operation control unit to disable the electronic equipment.

The protection unit itself may comprise a position detector adapted to determine the position based on satellite signals, and an alarm unit adapted to send said alarm or respond to polling over a communication network. In further possible embodiments, the communication unit could be inseparably integrated with the protection unit, and the fault detector and the operation control unit could also be inseparably integrated with the electronic equipment. The communication unit and the fault detector are further adapted to communicate said control signals using encrypted communication. Thereby, the control signals cannot be "faked" by another sender.

The communication unit may be further adapted to transmit the control signals when queried by the fault detector, e.g. using a challenge and response procedure or the like. The communication unit and the fault detector may be further adapted to communicate said control signals using short range wireless communication, such as Bluetooth, Near Field Communication (NFC), Radio Frequency Identification (RFID), infrared or any other useful wireless signalling mechanism over a short distance.

Further possible features and benefits of this solution will become apparent from the detailed description below.

### Brief description of drawings

The solution will now be described in more detail by means of exemplary embodiments and with reference to the accompanying drawings, in which:

Fig. 1 is a block diagram illustrating an apparatus for supporting theft protection of an electronic equipment, according to some possible embodiments.

Fig 2 is a block diagram illustrating another variant of an apparatus for supporting theft protection of an electronic equipment, according to further possible embodiments.

Fig. 3 is a flow chart illustrating a procedure in an apparatus for supporting theft protection of an electronic equipment, according to further possible embodiments.

Fig. 4 is a flow chart illustrating in more detail a procedure in an apparatus for supporting theft protection of an electronic equipment, according to further possible embodiments.

### Detailed description

Briefly described, a solution is provided to make it less attractive or even pointless to steal an electronic equipment, particularly when the electronic equipment is provided with a protection unit adapted to communicate with a surveillance centre, e.g. by sending an alarm or similar, when it is detected that the electronic equipment has been stolen. The electronic equipment could be any device, machine, appliance or product with some functionality and/or operational features that can be controlled electronically. Some illustrative examples were given above, although the solution is not limited to any particular types of electronic equipment as long as the features of this solution can be applied.

As discussed above, it may be possible for an ingenious thief to locate such a protection unit and separate it from the electronic equipment and/or demolish it so that no alarm can be issued, or to bring the equipment to a place with no contact to an external network, and so forth. This solution is devised to address these problems somewhat differently by making it unattractive and not at all tempting to steal the equipment in the first place. This is accomplished by an apparatus that is configured to disable the electronic equipment when it is detected that the protection unit is somehow not working properly as a result from theft or demolition, or when the actual theft is detected. Thereby, the stolen equipment is made useless and there is no point in stealing such a useless equipment. A delay function may be employed such that the electronic equipment will not be disabled too soon "by mistake", e.g. due to any temporary lost contact with the network or GPS system and so forth.

In this solution, this is realized by using a communication unit, installed at the protection unit, which communication unit is able to check and sense that the protection unit is working as it should, i.e. in a predefined manner, and in that case transmit control signals which are received by a fault detector installed at the electronic equipment. Those control signals thus effectively acknowledge that the protection unit is all right. As long as the fault detector receives the control signals properly, it can be assured that if the equipment would be stolen, the protection unit is able to act as expected and to communicate with a surveillance centre or the like, e.g. by issuing an alarm when an abnormal position is detected or when the protection unit is moved, shaken or stirred, or when a motion sensor detects presence of an unexpected person, etc. Thus, the protection unit may comprise a GPS function, a shake sensor and/or a motion sensor or the like. The protection unit can be designed and configured in various different ways to detect theft and the solution is not limited to the above examples of GPS, shake sensor and motion sensor.

If a thief tries to remove or demolish the protection unit, it will no longer work in the predefined manner which can thus be detected by the fault detector depending on the control signals as follows. For example, if the protection unit is separated from the electronic equipment or demolished, the fault detector will no longer receive control signals which thus implies that the protection unit does not work in the predefined manner. In this respect, a delay may be employed, as mentioned above, such that a fault is assumed once a certain period of time has elapsed without receiving control signals, e.g. in the range of a few hours or a day.

In another example, the protection unit may not be able to determine a position such as when the electronic equipment is brought to a location where it is not possible to receive GPS signals. In another example, the protection unit may not be able to issue any alarm, and/or to connect to a communication network such as when its function for external communication has been put out of order or when the electronic equipment is brought to a location where it is not possible to contact an external communication network such as an underground room, basement or similar.

In either case, the protection unit does not work in the predefined manner and the communication unit may therefore transmit a fault notification in some way in the control signals to the fault detector to indicate a fault at the protection unit, e.g. any of the above malfunctions. For example, the fault notification may be effectuated as an explicit fault message or a specific signal or code indicating the fault. The fault notification may also be effectuated as a noticeable change in the sending of control signals, e.g. by stopping sending them altogether, as long as the fault detector is able to detect that the protection unit is not working in the predefined manner depending on the control signals.

Another possibility is that the communication unit transmits control signals indicating that the protection unit has detected theft of the electronic equipment, e.g. detecting an abnormal situation where it is likely that the equipment is being stolen. Another possibility is that the protection unit has detected theft of the electronic equipment by means of a notification from the surveillance centre, e.g. in case the owner of the equipment has himself reported the theft to the surveillance centre.

The fault detector may in either case indicate the theft such that the operation control unit disables the electronic equipment in response to the indicated theft. The fault detector may indicate the above-detected fault or theft by emitting a signal or pulse that triggers the operation control unit to disable the electronic equipment.

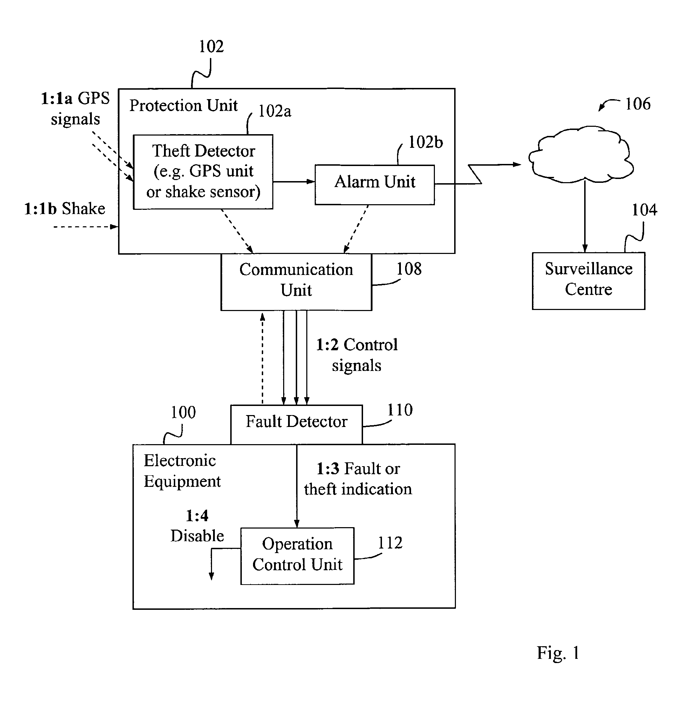

An example of how this solution can be implemented in practice will now be described with reference to Fig. 1. An electronic equipment 100 is illustrated schematically and is assumed to have some functionality and/or operational feature(s) that can be controlled electronically. The equipment 100 is protected from theft by means of a protection unit 102, installed at the electronic equipment 100, which may use GPS or a shake or motion sensor for detecting theft, e.g. according to some conventional technique. Thus, a "theft detector" 102a is schematically shown which may be configured to determine its position by receiving GPS signals, indicated by an **action 1.1a,** or by being sensitive to movements or shakings, indicated by another **action 1.1b,** or in any other useful manner. The theft detector may also be sensitive to movements of a person located beside the equipment, like a "motion detector", which could of course be deactivated by the equipment owner using a key or similar.

Whenever theft of the equipment is detected, the theft detector 102a triggers an alarm unit 102b to issue an alarm which is sent to a surveillance centre 104 over an external communication network 106, in a conventional manner, e.g. using a wireless communication technique. It is also possible that the alarm unit 102b can indicate an alarm by using a "polling" procedure, such that the alarm unit is now and then polled by the surveillance centre 104, e.g. at regular intervals, and the alarm is indicated when the alarm unit 102b does not respond to the polling. The protection unit 102 may also be designed for activation and deactivation by a user, which is however outside the scope of this solution.

The apparatus of this solution involves a communication unit 108 which can be installed at the protection unit 102. When installed, the communication unit 108 may be more or less inseparably integrated with the protection unit to make it virtually impossible to remove from the protection unit 102. The communication unit 108 is adapted to transmit control signals, as shown by an **action 1:2,** to acknowledge and indicate that the protection unit 102 is working in a predefined manner, i.e. as expected. The control signals may be transmitted by means of a local wireless link based on e.g. Bluetooth, Near Field Communication (NFC), Radio Frequency Identification (RFID), infrared or any other useful wireless signalling mechanism over a short distance. The control signals could also be transmitted over a wired link.

The apparatus of this solution further involves a fault detector 110 which can be installed at the electronic equipment 100. When installed, the fault detector 110 may be more or less inseparably integrated with the equipment 100 to make it virtually impossible to remove from the electronic equipment 100. The control signals are normally received by the fault detector 210, e.g. as a confirmation that the protection unit 102 is working in the predefined manner. The communication unit 108 and the fault detector 110 may be further adapted to communicate the control signals using encrypted communication such that the control signals cannot be "faked" by any outside sender. Transmitting the control signals may further involve a challenge and response procedure such that the fault detector 210 frequently sends a so-called challenge to the communication unit 108, as indicated by a dashed arrow, which responds by sending control signals.

The communication unit 108 is thus configured to check, in some sense, the function of e.g. the theft detector 102a and/or the alarm unit 102b, as schematically indicated by dashed arrows therefrom, and send out control signals accordingly. The communication unit 108 may also send out control signals indicating that the theft detector has detected an abnormal situation where it is likely that the equipment is being stolen.

The fault detector 110 is thus adapted to receive the control signals from the communication unit 108, and to indicate a fault when detecting that the protection unit 102 is not working in the predefined manner depending on the control signals. The apparatus also involves an operation control unit 112 which is adapted to disable the electronic equipment 100 when a fault is indicated by the fault detector 110, as follows.

As mentioned above, the fault detector 110 may detect that the protection unit 102 is not working in the predefined manner when no control signals are received from the communication unit 108, e.g. if the latter has been demolished or separated from the equipment 100. The fault detector 110 may also detect that the protection unit is not working in the predefined manner when the communication unit 108 transmits a fault notification or the like, depending on the implementation. This fault notification may indicate any of the following: the protection unit 102 is not able to determine a position, the protection unit 102 is not able to issue any alarm or respond to any messages from the surveillance centre 104, and the protection unit 102 is not able to connect to the communication network 106.

The fault detector 110 is thus configured to indicate a fault when detecting that the protection unit 102 is not working in the predefined manner, depending on the control signals. This may be done by the fault detector 110 sending a fault indication to the operation control unit 112, as shown in another **action 1:3.** The fault detector 110 may also be configured to indicate theft of the equipment, likewise depending on the control signals, which may be done by sending a theft indication to the operation control unit 112 in action 1:3.

When receiving such a fault indication or theft indication, the operation control unit 112 is adapted to disable the electronic equipment 100, as schematically shown in a further **action 1:4.** Disabling the electronic equipment 100 may be done in various different ways, depending on how the electronic equipment 100 is constructed and operates. To mention a few illustrative examples, if the electronic equipment 100 is an electronically controlled vehicle or outboard marine engine, it can be disabled by deactivating the electronics for ignition of the engine, or by locking the engine electronically, and so forth. In another example, a digital camera may be disabled by deactivating the electronics for taking pictures. It can be easily understood that any electronically controlled equipment can be disabled by manipulating the electronics therein in a way that cannot be tampered with by an outside person.

In this solution, it is assumed that it is possible to disable the electronic equipment 100 by deactivating or rendering some needed function therein inoperative in a way that cannot be mended by an outside person, at least not without considerable specific skills and knowledge which is presumably lacking with most thieves and malicious or illicit persons in this context. Thereby, the electronic equipment 100 is made completely useless and unattractive to steal. The equipment 100 may be provided with a label, tag, sticker or the like to inform any impending thieves that it will become disabled and useless if stolen, to prevent them from trying altogether.

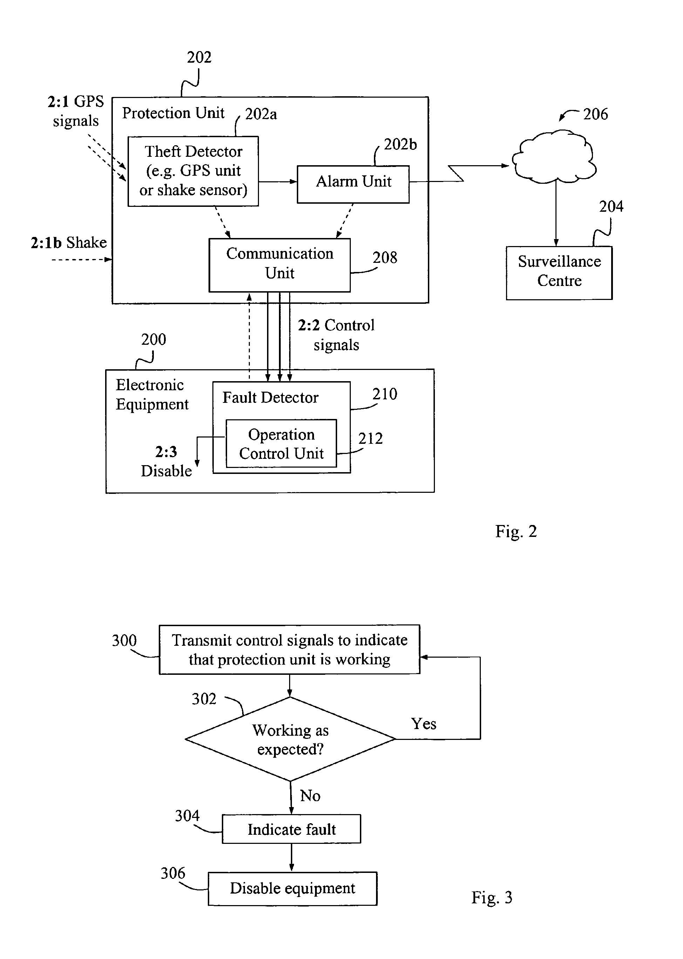

Fig. 2 illustrates another example of how this solution can be implemented in practice to support theft protection of an electronic equipment 200 which is slightly different from the example in Fig. 1, still basically using the same solution. Likewise, the equipment 200 is protected from theft by means of a protection unit 202 which may comprise a theft detector 202a and an alarm unit 202b configured to send an alarm to a surveillance centre 204 over an external network 206. The protection unit 202 may be designed and configured basically in the manner described for protection unit 102 of Fig. 1, which will not be repeated here again. **Actions 2:1 a** and **2:1 b** correspond to actions 1:1 a and 1:1b in Fig. 1.

In this example, the communication unit 208 is shown as being a wholly integrated part of the protection unit 202, e.g. by manufacture or production thereof. Further, the operation control unit 212 being adapted to disable the equipment 200, is shown as a part of the fault detector 210 while both fault detector 210 and operation control unit 212 are inseparably integrated with the electronic equipment 200 to make them virtually impossible to remove from the equipment 200. Also in this example, the communication unit 208 is adapted to transmit control signals, shown in an **action 2:2,** indicating whether the protection unit 202 is working in a predefined manner, and the operation control unit 212 is adapted to disable the equipment 200 depending on the control signals, shown in another **action 2:3,** i.e. when the fault detector 210 indicates a fault of the protection unit 202 or theft of the equipment 200.

A procedure for protecting an electronic equipment from being stolen when using an apparatus for supporting theft protection of the electronic equipment, will now be described with reference to the flow chart in Fig. 3. It is assumed that a protection unit is also used at the electronic equipment, which protection unit is adapted to communicate with a surveillance centre when it is detected that the electronic equipment has been stolen. This procedure can be put into practice by using the apparatus of Fig. 1 or the apparatus of Fig. 2.

In a first shown **action 300,** control signals are transmitted, such as the control signals transmitted from the communication unit 108 or 208 above, indicating whether the protection unit is working in a predefined manner, i.e. as expected. As suggested above, the control signals may be encrypted to prevent any outside sender to send faked control signals. In a further **action 302,** it is determined if the protection unit is working in the predefined manner or not, depending on the control signals transmitted in action 300, which determination may be done by the fault detector 110 or 210 above. If the protection unit is working in the predefined manner, the process may be repeated by returning to action 300 in order to keep monitoring the protection unit further.

However, if it is detected in action 302 that the protection unit is not working in the predefined manner depending on the control signals, a fault is indicated in another **action 304** which may be done by the fault detector 110 or 210 above. As mentioned above, a delay, or "hysteresis", may be introduced before indicating the fault to avoid any temporary deviation from the predefined manner not caused by theft. In a final shown **action 306,** the electronic equipment is disabled in response to the indicated fault, which may be done by the operation control unit 112 or 212 above.

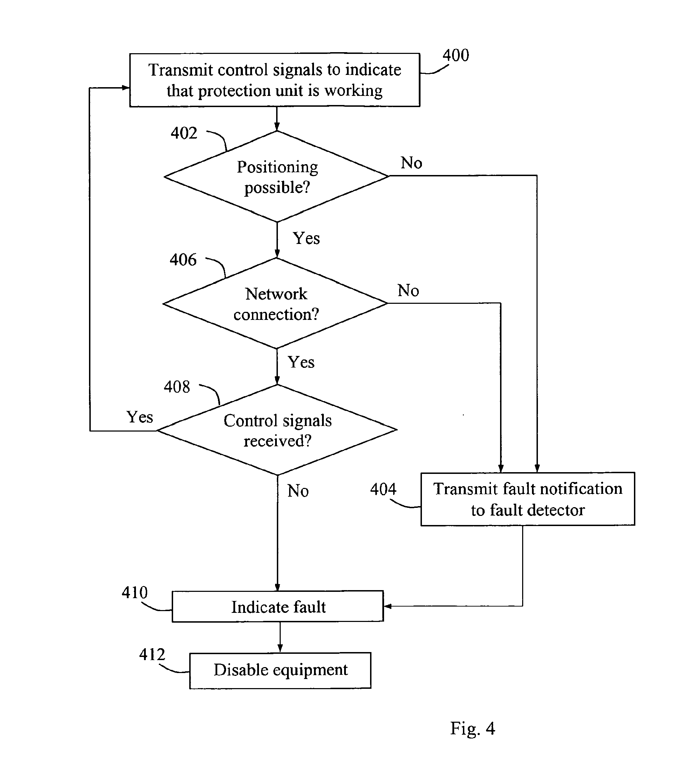

The flow chart in Fig. 4 illustrates a more detailed variant of how the solution could be put into practice for supporting theft protection of an electronic equipment, again using a protection unit adapted to communicate with a surveillance centre when it is detected that the electronic equipment has been stolen. As in some of the above-described examples, the used protection unit comprises a theft detector with a positioning function, e.g. using GPS signals. The protection unit also comprises an alarm unit configured to send an alarm to a surveillance centre over an external communication network. It is also assumed that an apparatus is used comprising a communication unit such as 108 or 208 above, a fault detector such as 110 or 210 above, and an operation control unit such as 112 or 212 above.

In a first shown **action 400,** control signals are transmitted to the fault detector to indicate whether the protection unit is working in a predefined manner, i.e. as expected, which corresponds to action 300 above. The control signals should be received as expected by the fault detector as long as the protection unit is working alright, as described above. In a further **action 402,** it is determined whether positioning is possible, i.e. whether the protection unit is able to determine a position by receiving external GPS signals or similar from a satellite and determining the position based on the satellite signals. This determination may be done by the above communication unit 108 or 208. If it is determined in action 402 that positioning is not possible, a fault notification is provided in the control signals to the fault detector in an **action 404,** e.g. from the above communication unit 108 or 208 to the above fault detector 110 or 210.

If the positioning function is found to be working in action 402, it is further determined whether the protection unit is able to connect to a communication network, in a next shown **action 406.** If no network connection is possible or existent in action 406, the process moves to action 404 and a fault notification is provided in the control signals to the fault detector. If a network connection is found to be possible or existent in action 406, it is further determined whether the transmitted control signals can be received at all by the fault detector, in a next shown **action 408.** If so, it can be concluded that the protection unit is working alright, i.e. in the predefined manner, from the outcome of actions 402, 406 and 408, and the process may be repeated by returning to action 400 in order to keep monitoring the protection unit further.

However, if it is found in action 408 that no control signals can be received by the fault detector whatsoever, or if a fault notification has been transmitted as of action 404 as a result from any of actions 402 and 406, the fault detector indicates a fault in an **action 410,** corresponding to action 304 above and the operation control unit disables the electronic equipment in response to the indicated fault, in a final **action 412.** In that case, the protection unit has effectively detected that the protection unit is not working in the predefined manner depending on the control signals either received as the above fault notification according to action 404 or not received at all according to action 408.

By using any of the above-described embodiments, theft of the electronic equipment will be less tempting or even completely pointless since it would result in disablement of the equipment, effectively making it more or less useless. Any potential thieves are therefore not motivated to steal the electronic equipment.

While the solution has been described with reference to specific exemplary embodiments, the description is generally only intended to illustrate the inventive concept and should not be taken as limiting the scope of the solution. For example, the terms "electronic equipment", "protection unit", "theft detector", "communication unit", "fault detector", "control signals" and "operation control unit" have been used throughout this description, although any other corresponding entities, functions, and/or parameters could also be used having the features and characteristics described here. The solution is defined by the appended claims.

## Claims

1. An apparatus for supporting theft protection of an electronic equipment (100, 200) when using a protection unit (102, 202) adapted to communicate with a surveillance centre (104, 204) when it is detected that the electronic equipment has been stolen, the apparatus comprising:
- a communication unit (108, 208) adapted to transmit control signals indicating whether the protection unit is working in a predefined manner,
- a fault detector (110, 210) adapted to receive the control signals and to indicate a fault when detecting that the protection unit is not working in the predefined manner depending on the control signals, and
- an operation control unit (112, 212) adapted to disable the electronic equipment in response to the indicated fault.

2. A theft protection apparatus according to claim 1, wherein the communication unit (108, 208) is further adapted to transmit control signals indicating that the protection unit or the surveillance centre has detected theft of the electronic equipment, the fault detector (110, 210) is further adapted to indicate said theft, and the operation control unit (112, 212) is further adapted to disable the electronic equipment in response to the indicated theft.

3. A theft protection apparatus according to claim 1 or 2, wherein the fault detector is further adapted to detect that the protection unit is not working in the predefined manner when no control signals can be received from the communication unit.

4. A theft protection apparatus according to any of claims 1-3, wherein the fault detector is further adapted to detect that the protection unit is not working in the predefined manner when the communication unit transmits a fault notification indicating any of: the protection unit is not able to determine a position, the protection unit is not able to issue any alarm or respond to polling, and the protection unit is not able to connect to a communication network (106, 206).

5. A theft protection apparatus according to any of claims 1-4, wherein the fault detector indicates said fault or theft by emitting a signal or pulse that triggers the operation control unit to disable the electronic equipment.

6. A theft protection apparatus according to any of claims 1-5, wherein the protection unit (102, 202) comprises a position detector (102a, 202a) adapted to determine the position based on satellite signals, and an alarm unit (1 02b, 202b) adapted to send said alarm or respond to polling over a communication network (106, 206).

7. A theft protection apparatus according to any of claims 1-6, wherein the communication unit is inseparably integrated with the protection unit.

8. A theft protection apparatus according to any of claims 1-7, wherein the fault detector and the operation control unit are inseparably integrated with the electronic equipment.

9. A theft protection apparatus according to any of claims 1-8, wherein the communication unit and the fault detector are further adapted to communicate said control signals using encrypted communication.

10. A theft protection apparatus according to any of claims 1-9, wherein the communication unit is further adapted to transmit the control signals when queried by the fault detector.

11. A theft protection apparatus according to any of claims 1-10, wherein the communication unit and the fault detector are further adapted to communicate said control signals using short range wireless communication.

12. A method for supporting theft protection of an electronic equipment when using a protection unit adapted to communicate with a surveillance centre when it is detected that the electronic equipment has been stolen, the method comprising:
- transmitting (300) control signals from a communication unit at the protection unit indicating whether the protection unit is working in a predefined manner,
- indicating (304) a fault when detecting (302) that the protection unit is not working in the predefined manner depending on the control signals, and
- disabling (306) the electronic equipment in response to the indicated fault.

13. A method according to claim 12, further comprising transmitting control signals from the communication unit indicating that theft of the electronic equipment has been detected, indicating said theft, and disabling the electronic equipment in response to the indicated theft.

14. A method according to claim 12 or 13, wherein it is detected that the protection unit is not working in the predefined manner when no control signals can be received from the communication unit.

15. A method according to any of claims 12-14, wherein it is detected that the protection unit is not working in the predefined manner when the communication unit transmits a fault notification indicating any of: the protection unit is not able to determine a position, the protection unit is not able to issue any alarm, and the protection unit is not able to connect to a communication network.
